Europäisches Patentamt

European Patent Office

Office européen des brevets

(11) Publication number: **0 484 525 A1**

# EUROPEAN PATENT APPLICATION
## published in accordance with Art. 158(3) EPC

(21) Application number: 90907503.8

(22) Date of filing: 24.05.90

(86) International application number: **PCT/JP90/00677**

(87) International publication number: **WO 91/18440 (28.11.91 91/27)**

(51) Int. Cl.5: **H02K 21/14**

(43) Date of publication of application: **13.05.92 Bulletin 92/20**

(84) Designated Contracting States: **DE FR GB**

(71) Applicant: **HIRATSUKA, Kazukimi** **7-1-204, Natorigaoka, 6-chome Natori-shi Miyagi 981-12(JP)**

(72) Inventor: **HIRATSUKA, Kazukimi** **7-1-204, Natorigaoka, 6-chome Natori-shi Miyagi 981-12(JP)**

(74) Representative: **Burke, Steven David et al** **R.G.C. Jenkins & Co. 26 Caxton Street London SW1H 0RJ(GB)**

(54) **POWER SERVOMOTOR.**

(57) On the basis of the interpretation, without preocupation, of the concept of "motor" as a fundamental and genuine interaction between electromagnets, all the problems have been solved by full control effected by varying the arrangement of acting poles while disposing face to face twice as many acting poles as the number of non-acting poles and fixing the polarity of the non-acting poles. More specifically, poles are arranged in such a pattern that: rotor poles/stator poles = 1/2; poles N and S are alternatively arranged in the rotor whereas they are in the order of NNSS in stator; and the poles are housed in inverters in two systems, whereby all the poles can always act continuously and simultaneously even when the rotating shaft is in any angular position, and thus power increase, energy saving, and size/weight reduction of the motor are made possible to eliminate the possibility of overload entirely.

Fig.1

(Technical Field)

Motor and Drive Electronics Technique

(Background Art)

There are many usage which can cause a motor to overload. Safety measures is only to protect or limit its usage. There is no method to positively prevent the overload from occurring. The reason why the motor overload is dangerous described as follows:

When a output rotor axis is locked, excessive overcurrent would cause fires and may result in the destruction of the semiconductor device included in the controller.

Therefore, it would be necessary to reconsider the design of the motor fundamentally.

Conventionally, motor coil size would be greater, so as to reduce input voltage and increase current flowing therein. As a result, the coil would fragile against an excessive load.

In prior art D.C. motors, it is difficult to run the motor at a rapid rate, since the rotor magnetic flux crosses the stator coils and since an antielectromotive force occurs in the coil, then which disturb the speed.

In general, the relationship between the torque and rotor speed, is such that, at low speed, the torque rotates powerfully, and at a fast rate, more weakly.

It is difficult to run the motor at a slow rate, because of heat loss.

D.C. motors are powerful, but it is not desirable to make large its size, for practical structure.

The D.C. Brushless Motor has a structure similar to A.C. motor and is controlled by an INVERTER.

In A.C. motor, the efficiency in usage of the active coil is poor because of the principle involved in creating a revolving magnetic field, since it is necessary to use alternating sinusoidal currents in the coil, the ratio of the efficiency thereof to that of D.C. one is 1 to $\sqrt{2}$.

(Disclosure of Invention)

In order to solve the problem of the prior art, the present invention has the basic design principle directed to make little current and to make high voltage.

The force of the magnetic field is proportional to current X number of turns of coils, so it is possible to obtain the same magnetic power by means of coil of large numbers at a low current. Thus, if overcurrent occurs, the large amount of coil resistance will render it safe.

In order to convert electricity to energy, as a result of many times and longer term of experiments, I discovered the simplest and the most efficient method structure of the motor, as described below.

Rotor poles are arranged alternately in an order N•S ...

Stator poles are arranged in an order of N•N•S•S ...

The proportion of rotor poles to stator poles is one to two.

Stator poles are grouped into 2 groups which are arranged alternately with a shift by one pole therebtween.

The magnetic field is alternated according to a sinusoidal wave. Thus, all of the stator and rotor poles are opposite one to another directly. Therefore, the all of magnetic field induced thereby would be effectively utilized. The magnetic rotational power can be produced continuously unintermittently.

Stator poles of two systems are connected to respective independent INVERTERS.

Thereby, all poles are able to work simultaneously and continuously in any and all situations at the real time. All action is achieved electromagnetically, the motor is capable of running at slow and fast speeds. Also, since the torque is in proportion to speed, it is possible to run at a fast rate without losing torque.

Due to effective coil winding usage and to that all of the stator and rotor poles are simultaneously and continuously activated, the rotating power would be made greater. High speed response to cause forward rotation, reverse rotation, braking, releasing and accurate speed control which can not be achieved by the prior art technique can be achieved according to the present invention.

When the stator electromagnetic coil, which was subjected to a process to give a heat resistance and voltage withstanding, is frequency controlled, even though it is locked to cause overload, the current flowing therein would be maintained constant, thereby it is safety. Therefore, it is unnecessitate a particular overload limiting means.

The present invention can thus be applicable not only to compact motor, but also to a large size of motor.

Thus, the problem which can not be solved by the prior art can be solved by the present invention.

In case of test motor, rotation at speed 0 ∿ 12,000 r.p.m. can be achieved. Further, for example, at 10,000 r.p.m. a switching between forward and reverse rotations, stop, and release can be achieved instantaneously. A current changing at the switching was very little. The torque was greater than 10 kg.cm. The voltage and current are 100 V and 0.7 A. When, as the rotor poles, "WELLMAX" produced by Sumitomo Metal Industries, Ltd. was used, an electromagnetic energy greater than that produced by a permanent magnet of 10KOe is available. Thus, reducing the energy consumption, and weight and size thereof can be achieved.

(Brief Description of the Drawings)

Fig. 1 (1) - (4) schematically shows an operation of the embodiment, wherein

A group comprises stator poles 2, 4, 6, 8;

B group comprises stator poles 1, 3, 5, 7;

a denotes a rotor angular position sensor for A group;

b denotes a rotor angular position sensor for B group; and

N1, N2, S1 and S2 denote rotor poles.

Fig. 2 schematically shows a driver circuit, wherein

A and B denote stator coils of respective groups;

C denotes a rotor coil; and

semiconductor device may be SCR, and also may be MOS•FET or IGBT.

Fig. 3 is a description of polarity relation of stators according to rotation of rotors of groups A and B.

(Best Mode for Carrying Out the Invention)

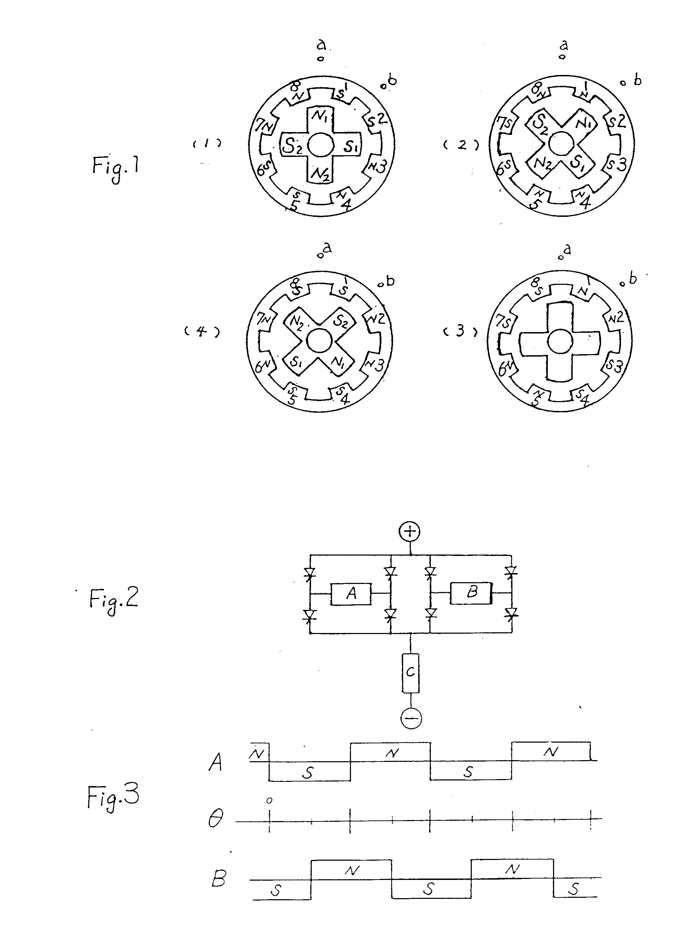

Fig. 1 is a standard, which is easy to carry out.

(Industrial Applicablity)

The only change that needs to be made is in the reconstruction of the motor, coil so it can be easily applied to industry.

Larger size and also smaller size motors can be converted into D.C. brushless ones. The speed change between low (not higher than 1,000 r.p.m.) and high (3,000 - 20,000 r.p.m.), which was difficult in the prior art, can be achieved smoothly and freely. As a power source, A.C., D.C. and pulse may be directly used. The voltage 10 ∿ 1,000 V may be used. The motor is applicable to working machine, robot, train, linear motor car, electric vehicle, and etc.

**Claims**

1. The Rotor Pole is arranged alternately in N and S order;

the Stator Pole is arranged in N•N•S•S order; and

the proportion of Rotor Poles to Stator Poles is one to two.

2. Stator Poles are divided into 2 groups;

the 2 groups are arranged alternately in each pole order;

stator Poles are connected to respective each system's INVERTERS; and

all poles are able to work continuously at the real time while in any rotating position.

**AMENDED CLAIMS**

[Filed at the International Bureau on 8 October 1991; Original claims 1 and 2 are replaced by the new claim 1. (one page)]

1. A motor comprising:

a rotor poles including N and S poles arranged alternatively; and

a stator poles arranged alternately in an order of N-N-S-S;

wherein a ratio of the numbers of the stator and rotor poles is 1:2, electromagnetic of the stator constitute two systems engaged each other, a rotational angular position of the rotor is always synchronized with the polarities of two groups of the stator poles connected to respectively independent inverters as a closed loop, so that all of the stator and rotor poles are effective to rotating the rotor simultaneously and continously at all time period.

Fig.1

Fig.2

Fig.3

# INTERNATIONAL SEARCH REPORT

International Application No PCT/JP90/00677

## I. CLASSIFICATION OF SUBJECT MATTER (if several classification symbols apply, indicate all) 6

According to International Patent Classification (IPC) or to both National Classification and IPC

Int. Cl$^5$    H02K21/14

## II. FIELDS SEARCHED

### Minimum Documentation Searched 7

| Classification System | Classification Symbols |
|---|---|
| IPC | H02K21/14, 37/00, 37/14 |

### Documentation Searched other than Minimum Documentation to the Extent that such Documents are Included in the Fields Searched 8

| | |
|---|---|
| Jitsuyo Shinan Koho | 1950 - 1990 |
| Kokai Jitsuyo Shinan Koho | 1972 - 1990 |

## III. DOCUMENTS CONSIDERED TO BE RELEVANT 9

| Category * | Citation of Document, 11 with indication, where appropriate, of the relevant passages 12 | Relevant to Claim No. 13 |
|---|---|---|
| XY | JP, B2, 57-12386 (Shinko Electric Co., Ltd.), 10 March 1982 (10. 03. 82), Lines 10 to 36, column 2, Figs. 1, 2 & 3 (Family: none) | 1 - 2 |
| Y | JP, A, 50-140807 (Canon Inc.), 12 November 1975 (12. 11. 75), Line 5, lower right column, page 29 to line 3, lower left column, page 30, Fig. 6 (Family: none) | 2 |

* Special categories of cited documents: 10

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

## IV. CERTIFICATION

| Date of the Actual Completion of the International Search | Date of Mailing of this International Search Report |
|---|---|
| August 18, 1990 (18. 08. 90) | September 3, 1990 (03. 09. 90) |

| International Searching Authority | Signature of Authorized Officer |
|---|---|
| Japanese Patent Office | |

Form PCT/ISA/210 (second sheet) (January 1985)